# EUROPEAN PATENT APPLICATION

(11) **EP 2 804 124 A1**
(43) Date of publication of application: **19.11.2014**
(21) Application number: 14161306.7
(22) Date of filing: 24.03.2014
(51) Int. Cl.: G06F 21/12, G06F 21/32

(54) **Methods for activating end-user software licences**

(30) Priority: 17.05.2013 US 201313897256
(71) Applicant: Veritrix, Inc., Palo Alto, CA 94301 (US)
(72) Inventor: Headley, Paul, Palo Alto, CA 94306 (US)
(74) Representative: Mollekopf, Gerd Willi

(57) **Abstract**

Methods for software activation are provided that associate a software license key with one or more authorized individuals such that an authorized individual can readily transfer a license between different platforms. A biometric sample of the individual is stored in an enrollment step upon first activation of the software. Later, the same individual can provide a biometric sample that matches the stored biometric sample in order to activate the software on another platform, rendering the first instance inactive if no additional activations are available. More than one individual can be authorized under a license that allows for multiple activations.

## Description

### BACKGROUND OF THE INVENTION

### Field of the Invention

The present invention relates generally to the field of authentication and more particularly to the field of software distribution.

### Related Art

End-user-software-licensing policies implemented by software vendors pose challenges to users since end-user-software-licenses often are machine licenses. For instance, it is not uncommon for end-users to install software on a particular machine, enter a license-key and thereby activate the software. Vendors can limit the number of software activations by limiting the number of activations for any particular license-key. The activations are associated with the machines on which the software is installed, not the end-user.

Many End-User-Software-License-Agreements (EULAs) specify that the end- user may install and use a vendors' software on a limited number of devices. For instance, Adobe® allows installation of some software products on two machines. Each of the installations on the two machines may be active simultaneously. A new activation of the software on a third machine requires the user to deactivate an installation of the software on at least one of the activated software installations. The number of activations is controlled through a network interface, commonly the Internet.

In cases where a machine becomes inoperable or becomes unavailable, manual intervention by the vendor, license agent, or other entity controlling licenses is required to transfer a license to another operable machine. The procedure to allow users to transfer a license often involves revoking the current license and issuing a new license. The procedure for manually revoking licenses is expensive for vendors and inconvenient for licensed users.

To circumvent these vendor software license policies, some users install and activate software on as many machines as authorized by a license, then call the vendor and falsely claim that one or more machines have been stolen, or failed, and that they require additional activations under their license, thereby pirating additional copies of the software.

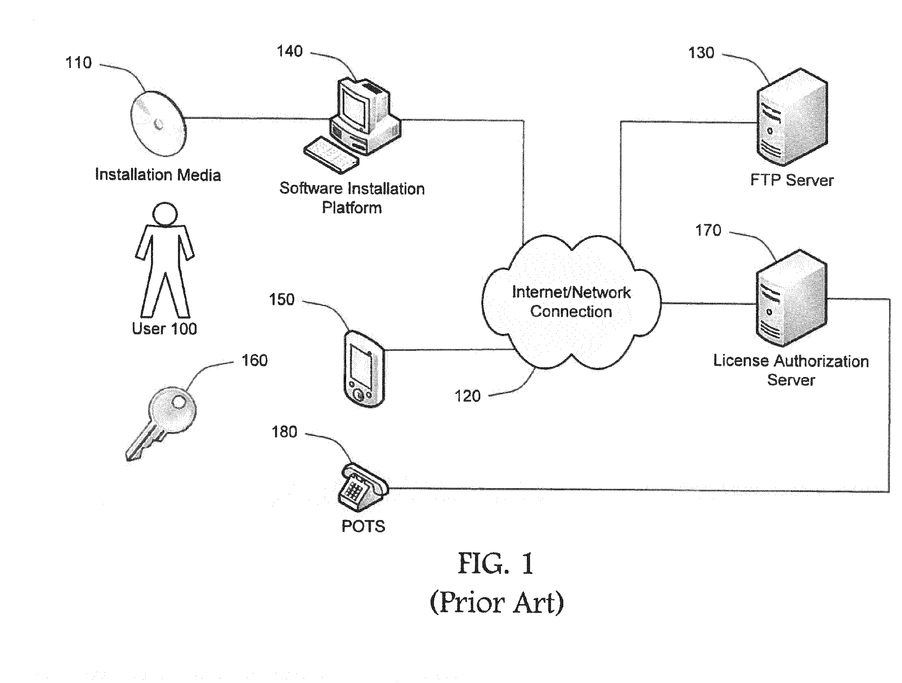

FIG. 1 schematically illustrates components used in a typical software license activation procedure according to the prior art. A user 100 obtains a software installation image, for example, via digital media 110 such as a CD ROM, DVD ROM, memory stick, etc. Alternatively, the user may obtain the software installation image via a network interface such as the Internet 120 from a file server such as an FTP server 130.

The software installation image is made available to the software installation platform, the machine on which the software installation image will be executed by the user 100, for example, a PC 140 or smartphone 150.

After the software is installed from the installation image, it must be activated before it can be used long term. In many cases, vendors provide a grace period, during which the installed software can be used prior to activation. The grace period can provide the user 100 with an opportunity to try the software before activating it. The grace period can also allow users 100 to operate the software immediately in those cases where a network connection or telephone connection to the vendor's license authorization server 170 is not available to activate the software license.

The software license activation procedure, whether or not a grace period is allowed, requires the user 100 to communicate a software license key 160 to a license authorization server 170. The software license key 160 is also known as a software-installation-key in the art. Communication of the software license key 160 can be performed through the installed software, or over the phone 180 through an automated system or by vendor personnel.

License authorization server 170 maintains a record of the number of activations available for each software license key 160. When the license authorization server 170 receives an activation request including the software license key 160, the license authorization server 170 determines whether any activations remain available and if so, the license authorization server 170 sends an activation code to the software installed on the platform 140, 150 to fully activate the software. If no activations remain for the given license key 160, the software is not activated.

The user experience, when activating software for first time use, begins by obtaining a software installation image. The user 100 then starts the software installation, which will prompt the user 100 to provide the software license key 160 from a package or an e-mail, for example. The software license key 160 can be provided, as noted above, through the installation software on the platform 140, 150 or through another channel such as over the phone, for instance. The user 100 then waits for the installation to complete, during which time the license authorization server 170 verifies the software license key 160 and provides an activation code. Once installation is complete, in many instances, the user 100 must activate the software license by accepting the terms. Then the software is fully functional on the platform 140, 150.

In addition to tracking the numbers of remaining activations available for each software license key 160, the license authorization server 170 can also store activation information in association with the activations that have already been used. Such information can identify the platform 140, 150, indicate a customer name, a location, an IP address, and so forth, and can be stored in databases, back-up storage, digital lockers associated with customer accounts, etc.

The license authorization server 170, during the activation process, commonly gathers information and in particular associates the software license key 160 with the platform 140, 150. There exist a number of methods for making this association including computing a machine signature that is sent to the license authorization server 170, writing license key values (usually encrypted) to the local disk, broadcasting license information on the local subnet, writing activation data to registry databases on the local machine, making contact with a license server over the network, etc.

For large organizations that license software for distribution to a large user population, the software license key 160 is distributed to users 100 to activate the software on their respective platforms 140, 150. The license authorization server 170 keeps an activation count for the particular software license key 160 until the limit set by the license is reached, after which no more activations are allowed. This procedure ultimately associates the software license with the platforms 140, 150 on which activations were successfully completed.

Another way that multiple activations for a license can be handled is with a local license server (not shown in FIG. 1). Each time a user 100 executes the software, a license is allocated from a pool of licenses. When the server license pool is empty, no further activations are allowed. Graceful exit of the software returns the license to the pool allowing another platform 140, 150 to execute the software.

A common method for associating a software license key 160 with a platform 140, 150 when activating a standalone license is to use a computed machine signature to determine if the software is active. For instance, in some implementations a machine signature comprises, or is computed from, one or more hardware characteristics such as the Media Access Control (MAC) address of an onboard network card, a CPU serial number, a disk serial number, model, disk drive manufacturer, disk drive size, graphics adapter, etc.

The machine signature mechanism prevents users 100 from cloning the disk drive, moving the clone to a second platform 140, 150 and operating the software on the second platform 140, 150. An attempt to get an activated copy running from a cloned disk, for example, results in a request to activate the software since the CPU and disk drive characteristics do not result in a machine signature matching the first activation machine signature.

Another strategy is a variation of the standalone activation just described. In this variant method a machine signature is computed and sent to the license authorization server 170 operated by the licensor. The machine signature is computed at activation time. Each time the software is started, the machine signature is verified. If the software is not activated, the software does not proceed.

It is worth noting that verifying the activation each time the software is started simplifies transferring licenses. A user can install the software on any number of platforms 140, 150. Using an authentication procedure, usually a user name and password, a user 100 can de-activate the software on a particular platform 140, 150. Then the user 100 can activate the software on another platform 140, 150 for immediate use. In this way the license can float, or more precisely be transferred to any platform 140, 150 that the user 100 chooses. Once de-activated, the software cannot be used on the prior platform 140, 150, though it remains installed.

The strategy of verifying the activation each time the software is started has a severe drawback, however. Since the signature of the platform 140, 150 to be de- activated is only stored on the platform 140, 150, to which, it is associated, a machine failure results in the loss of the license. Thus, if the platform 140, 150 fails while holding an activated license, there is no way to start the software to deactivate the license.

Other license activation strategies exist. For instance, software can periodically broadcast messages on a Local Area Network (LAN) to determine if other instances of the software are running. If another is found, the first is disabled. Despite the various strategies in use, no existing licensing strategy associates the software license key 160 to the user 100 personally. Instead, software licensing and activations are associated with machines on which the software is installed or the network environment in which the software is executing, and based on authentication methods such as username/password that identify accounts.

Using the most widely deployed software license activation practices not only leads to user inconvenience but it also facilitates software piracy. For example, the failure of a platform 140, 150 requires a vendor to allow a user 100 to transfer a license to another. In many cases, license transfers are performed without verifying that a failure actually occurred. For a user 100, an equipment failure is bad enough, and having to go through the vendor to transfer a license is a further inconvenience. For the vendor, the transfer usually requires staff intervention making the transfer an unwanted expense. However, for the software pirate, it is an easy way to obtain licenses for additional platforms 140, 150 at low cost.

### SUMMARY

The invention is defined in claims 1, 9 and 13, respectively. Particular embodiments are set out in the dependent claims.

The present invention provides methods for activating software on an installation platform such as a PC, smartphone, or tablet computer, and systems of one or more servers in communication with one another for implementing such methods. An exemplary method of the present invention comprises a step of receiving, with a first computing system, a software license key and first identifying information followed by a step of storing the software license key in association with the first identifying information, such as in a record of a database of a computer-readable memory. The receive software license key is encrypted in some embodiments, while in other embodiments the software license key and the first identifying information are contained within an encrypted envelope, and in some of these embodiments the software license key and the first identifying information are each separately encrypted as well. The first identifying information can comprise a machine signature and personal information, for example. In further embodiments, receiving the first software license key comprises receiving a hash of the first software license key.

The exemplary method further comprises a step of receiving a first biometric sample, either with the same or a second computing system, and storing the first biometric sample as a biometric template in association with the software license key. The method additionally comprises a step of sending a first activation code from either computing system to the installation platform upon completion of the user enrollment. Examples of the first biometric sample include a voice sample and an image of the user.

When the user wishes to transfer the license from one platform to another, the exemplary method further comprises, after sending the first activation code in the first instance, receiving the software license key and second identifying information, receiving a second biometric sample, matching the second biometric sample with the biometric template previously associated to the software license key, and then sending a second activation code. In some instances the first and second activation codes are the same.

In systems of the present invention, the one or more servers include logic configured to perform the noted method steps. As used herein, "logic" means a physical system capable of carrying out a defined series of steps. Logic as used herein can form part of a server, or other computing system capable of serving multiple network connections, and can comprise application-specific integrated circuits (ASICs) specially designed to perform the series of steps, firmware programmed to perform the series of steps, a microprocessor in combination with software stored on a computer-readable medium specifying the series of steps, or any combination of these. It will be understood that logic as used herein specifically excludes software alone. Additionally, "computer-readable medium" as used herein specifically excludes paper and transitory media such as carrier waves. Systems of the present invention also comprise computer-readable media to maintain databases for data storage.

Methods for activating software are also provided. An exemplary method, performed by a user, can comprise or consist essentially of installing an instance of the software on a platform and activating the instance on the platform by submitting a software license key and a biometric sample, and then receiving, with the installation platform, an activation code in response to submitting the biometric sample. The user can repeat this process with another platform to readily transfer the license to the other platform even when the software license agreement does not allow for additional activations. In such a situation a previously activated software instance on another platform is deactivated.

### BRIEF DESCRIPTION OF DRAWINGS

- FIG. 1: is a schematic representation of an exemplary system for activating licensed software according to the prior art.
- FIG. 2: is a schematic representation of an exemplary system for carrying out various methods described herein.
- FIG. 3: is a flowchart representation of a method for activating software according to an exemplary embodiment of the present invention.
- FIG. 4: is a flowchart representation of a further method for activating software according to an exemplary embodiment of the present invention.

### DETAILED DESCRIPTION OF THE INVENTION

Methods for software activation are provided that associate a software license key with one or more authorized individuals such that an authorized individual can readily transfer a license between different platforms. A biometric sample of the individual is stored in an enrollment step upon first activation of the software. Later, the same individual can provide a biometric sample that matches the stored biometric sample in order to activate the software on another platform, rendering the first instance inactive if no additional activations are available. More than one individual can be authorized under a license that allows for multiple activations.

The present invention associates the activation of licensed software with the end-user 100 by employing biometrics identification technologies. Associating the user 100 with the software license fulfills the expectation of the user 100 and allows the vendor to enforce a licensing policy. The user 100 is associated with the software license by associating user biometrics with a software license key for the software license. Accordingly, the present invention better allows vendors to meet the expectations of End- User-License-Agreements (EULAs) that purport to allow users 100 to have control over where they install and use purchased software products. Further, the current invention prevents fraud by associating licenses with people rather than hardware that may or may not be active.

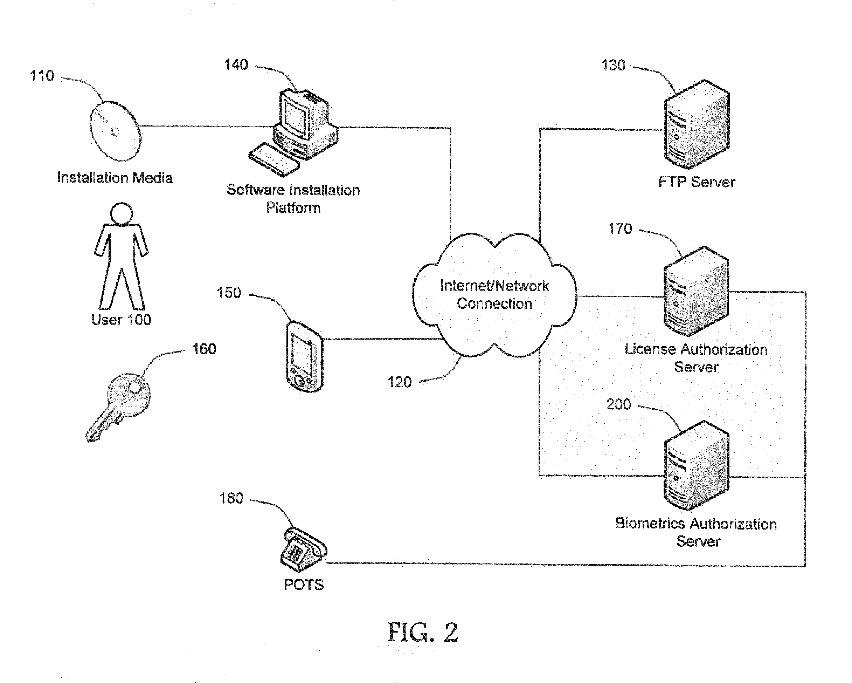

FIG. 2 schematically illustrates components used in a software license activation procedure according to an exemplary embodiment of the present invention that associates a software license key 160 with a user 100, a physical person, through the use of biometrics. Biometrics requires the user 100 to submit a sample of a particular biometric characteristic or behavior. Once submitted, the submitted sample is enrolled, meaning that it is associated with the user 100, such as by association with a unique identifier such as a user ID or account number. The enrolled biometric reference sample can be compared to future submissions to identify or verify the identity of the person. For instance, a fingerprint can be used to automatically identify a person using a fingerprint scanner, computing equipment, and software. A user 100 submits an initial fingerprint sample by swiping a finger over the scanner and this sample is stored as a template for comparison. At a later time, the same user 100 can prove their identity by again swiping the finger.

Biometric enrollment samples, and subsequent authentication samples submitted to prove identity, can be sent to a computing system of one or more servers, such as a license authorization server 170 and a biometrics authentication server 200 in communication with one another. Biometric samples for enrollment sent to the biometrics authentication server 200 are stored in association with the software license key 160. The biometrics authentication server 200 identifies the user 100 (referred to as the claimant when seeking authentication) at a later time by comparing the enrolled biometric sample, saved as a template, with the subsequent biometric sample. If a biometric sample for a user 100 matches the stored biometric template from when the user 100 was enrolled, then the licensed software can be activated by the license authorization server 170. Although biometrics authentication server 200 and license authorization server 170 are shown in FIG. 2 as separate servers, it will be understood that in some embodiments the functionality of both are integrated into a single server, while in other embodiments their functionalities are divided amongst additional servers. For example, enrollment can be handled by a third server (not shown).

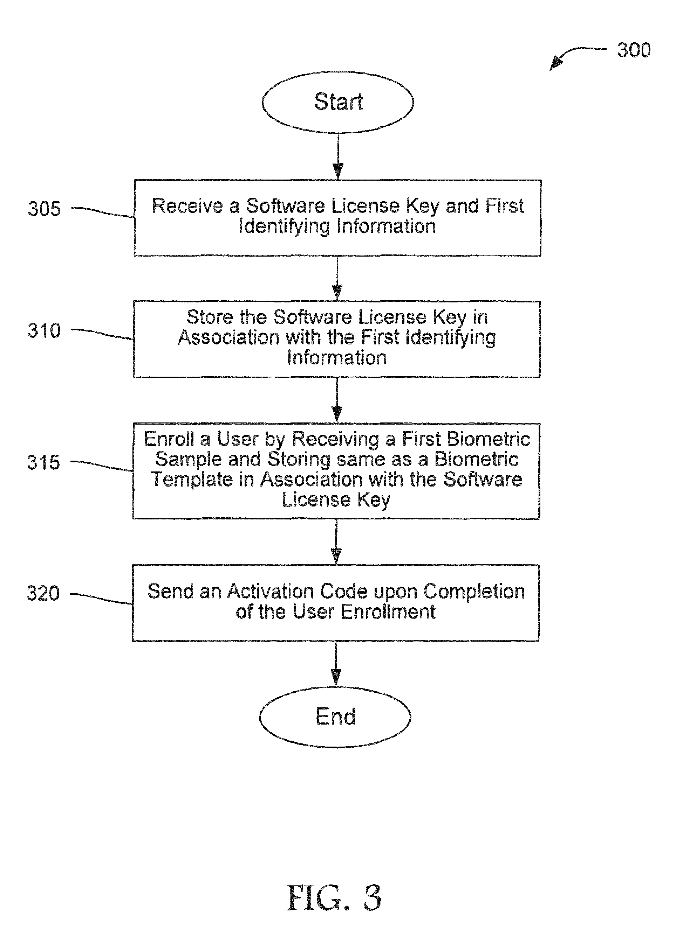

FIG. 3 is a flowchart representation of an exemplary method 300 of the present invention for activating software on an installation platform 140, 150. Steps of the activation method 300 can be performed, for example, by a software distributor through a license authorization server 170 and a biometrics authorization server 200 in communication with the installation platform 140, 150. The license authorization server 170 and the biometrics authorization server 200 can be the same server, in some embodiments.

Initially, the user 100 installs licensed software from a software installation image, as described above. Once installed, the software is configured to not fully function, either immediately or following some grace period, until the software is activated. At this point the licensed software can prompt the user 100 to request activation, or the software can automatically continue the activation process. In either event, a first communication channel between the installation platform 140, 150 and the license authorization server 170 is established, for example, by the licensed software.

In a step 305 of the method 300 a software license key 160 and first identifying information are received by a first computing system such as the license authorization server 170. Some or all of the software license key 160 and the first identifying information can be received over the first communication channel, such as the Internet or a local area network (LAN), while any balance of the software license key 160 and the first identifying information can be received over a second communication channel such as one between a phone 180 and license authorization server 170.

The software license key 160 can be a string of characters, either numeric or alphanumeric, for example, XXXXX-XXXXX-XXXXX-XXXXX-XXXXX, where X is an alphanumeric character: A-Z or 0-9. Identifying information can include both information that identifies the installation platform 140, 150 and information that identifies the user 100. An example of information that identifies the installation platform 140, 150 is a machine signature, while information that identifies the user 100 can include personal information such as a name, home address, e-mail address, phone number, and the like. In some embodiments the licensed software encrypts the software license key 160 before transmitting the software license key 160 to the first computing system. In further embodiments, the software license key 160 and the first identifying information are encrypted together resulting in an envelope that can be decrypted by the first computing system. In still further embodiments, the software license key 160 and/or the first identifying information are encrypted before being further encrypted together into the envelope.

Hashing can also be used in the alternative to encryption. Hashing is distinguished in the art from encryption in that an encrypted element can be decrypted to render the original value. Hashing is an irreversible process such that a resultant hash cannot be analogously "unhanshed." When two entities use the same hash algorithm on a same value the resulting hashes match. The hash can then be compared to determine a match without revealing the original value.

In some instances, once activation is required, the licensed software will open a web browser on the platform 140, 150 to allow the user 100 to complete the activation process with the license authorization server 170. In some of these embodiments, the user 100 is prompted through the web browser to enter the software license key 160, which may be printed on materials that came with the software installation image or may have been received by the user 100 in an e-mail or other electronic communication at the time of purchase. The user 100 can also be prompted to enter personal information.

In some embodiments, the user 100 is asked to call a phone number for the license authorization server 170, and once connected over the second communication channel to the license authorization server 170, or a human operator in communication with the license authorization server 170, the user 100 is prompted to enter the software license key 160, either verbally or using a number pad on the phone 180. The user may be enrolled using this second channel. In some of these embodiments the first identifying information can be sent over the first communication channel, while in other embodiments the licensed software encrypts the first identifying information with the software license key 160 and displays the resulting envelope to the user 100; the user 100 then is prompted to provide the resulting envelope to the license authorization server 170 over the second communication channel.

In a step 310 of the method 300 the first identifying information is stored in association with the software license key 160. For example, the first computing system can store the software license key and the first identifying information in a record of a database stored on non-volatile computer-readable medium. In some instances, the envelope itself is stored in association with the software license key 160.

In a step 315 the user 100 is enrolled. Enrollment entails a sub-step of receiving a first biometric sample from the user 100 with a second computing system and a sub-step of storing the first biometric sample as a biometric template in association with the software license key 160. The second computing system can be a biometrics authorization server 200 or can be the same computing system as the first computing system. In those embodiments where the second computing system is different than the first computing system, a third communication channel can be established between the installation platform 140, 150 and the second computing system.

The first biometric sample can comprise a voice sample or an image of the user 100, in various embodiments. For example, the second computing system can prompt the user 100 to say a word or phrase into a microphone of the platform 140, 150 or can prompt the user 100 to face a video camera of the platform 140, 150. Various alternatives employing single or multiple factors and either a single or multiple communication channels are described in U.S. Patent Applications 12/119,617 and 12/137,129 noted above.

Once the first biometric sample has been received, the first biometric sample is stored as a biometric template in association with the software license key 160. The biometric template can be added, for instance, to the record created previously for associating the software license key 160 with the first identifying information, or can be stored in a separate record in another database. The biometric template can be used in subsequent activation attempts to determine whether a person seeking to activate licensed software has previously been associated with the software license key 160.

In a step 320 of the method 300 an activation code is sent from the first computing system to the installation platform 140, 150 upon completion of the user enrollment step 315. In various embodiments the activation code is encrypted by the first computing system before being communicated to the installation platform 140, 150 over the first communication channel. When the first computing system completes the enrollment, the first computing system can count an activation against the software license key 160. This can be done by incrementing a counter associated with the software license key 160, such as a counter associated with the record that associates the software license key 160 to the first identifying information.

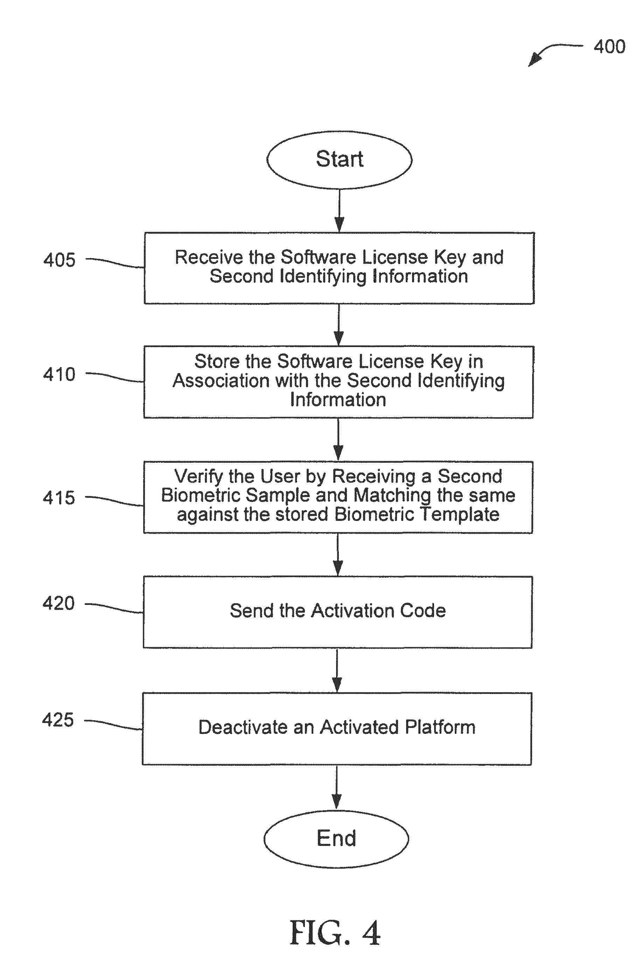

In some embodiments the counter is checked before the step 315 to determine whether the total number of activations granted under the terms of the EULA has been reached. In various embodiments checking the number of granted activations and the total allowed activations occurs in either step 305 or 310. The method described with respect to FIG. 4 illustrates additional method steps that can be performed in such situations.

Upon receipt of the activation code the licensed software on the platform 140, 150 compares the received activation code against an expected value and unlocks the functionality of the licensed software if the two match. In some embodiments, the expected value is the encrypted activation code, and in these embodiments the received encrypted activation code does not have to be decrypted to make the comparison.

When a user 100 starts previously activated software on a platform 140, 150, the software automatically calculates a machine signature and communicates the same to the license authorization server 170, if possible. If the machine signature matches the machine signature last stored in association with the software license key 160 the license authorization server 170 takes no action and allows the instance of the software to continue. Otherwise, the lack of a match indicates either an attempted fraud or that the license had previously been transferred to another platform 140, 150 and therefore the license authorization server 170 deactivates the instance of the software, optionally sending a message that the license was transferred to another platform 140, 150. In these situations an offer to purchase another activation can also be made. In various embodiments an envelope including the machine signature is sent and compared against the stored envelope.

FIG. 4 illustrates a method 400 that optionally follows step 320 of method 300. In a step 405 the first computing system again receives the software license key 160 over a first communications channel, but in association with different identifying information. This second identifying information can include different personal information or different machine signature, or both. The first computing system checks the record for the software license key 160 to determine whether the person seeking to activate the licensed software has previously activated the licensed software, and whether the number of activations equals the number of allowed activations.

In the event that the number of allowed activations has not been equaled, and personal information for the person seeking to activate the licensed software does not match any personal information already stored in association with the software license key 160, then the first computing system essentially repeats method 300 for the new user, having the new user also enroll in a step 315, before issuing the activation key in a step 320. If the number of allowed activations has been equaled, however, and the personal information for the person seeking to activate the licensed software does not match any personal information already stored in association with the software license key 160, then the new user can be offered an opportunity to purchase an extension of the license in order to increase the number of allowed activations.

If the number of allowed activations has been equaled, and the personal information for the person seeking to activate the licensed software matches the personal information for the user 100 stored in association with the software license key 160, but the machine signature for the platform 140, 150 is new, this indicates that the enrolled user 100 is seeking to activate the licensed software on a different platform 140, 150. In a step 410 of the method 400, the first computing system stores the second identifying information in association with the software license key 160 as in step 310 of method 300.

In a step 415 the user 100 is authenticated. The user 100 is prompted to provide a second biometric sample which is received by the biometrics authorization server 200. The second biometric sample is matched to the biometric template associated to the software license key 160 to demonstrate that the person seeking to activate the licensed software is actually the same person that was previously enrolled. If the second biometric sample matches the biometric template, then in a step 420 then the activation code is sent over the first communications channel and the new installation platform is activated. The activation code sent in step 420 is not necessarily the same as the activation code sent in step 320, in some embodiments. For instance, activation codes can be time stamped to make each one different.

It will be appreciated that the total number of activations will exceed the allowed number of activations when the activation code is sent in step 420 and some previously activated platform 140, 150 will have to be deactivated unless, as above, additional activations are purchased. Thus, in a step 425 a previously activated platform 140, 150 can be deactivated. Deactivation can be achieved by deleting a machine signature from the record for the software license key 160, for example. The platform 140, 150 that is deactivated in step 425 can be selected in a number of ways, with a particular manner specified in the EULA. for example, the first platform 140, 150 associated with the software license key 160 can be the first to be deactivated, or the last platform 140, 150 associated with the personal information of the user 100 can be deactivated, or the user 100 can be presented with a list of activated platforms 140, 150 from which to select one to be deactivated.

When activated licensed software on a platform 140, 150 has been deactivated, in some embodiments, the licensed software will continue to function normally until that instance of the licensed software is shut down. In these embodiments, currently activated licensed software will connect to the license authorization server 170 upon start-up. If that instance has been marked for deactivation in the interim, the license authorization server 170 can deactivate the licensed software.

In the foregoing specification, the invention is described with reference to specific embodiments thereof, but those skilled in the art will recognize that the invention is not limited thereto. Various features and aspects of the above-described invention may be used individually or jointly. Further, the invention can be utilized in any number of environments and applications beyond those described herein. The specification and drawings are, accordingly, to be regarded as illustrative rather than restrictive. It will be recognized that the terms "comprising," "including," and "having," as used herein, are specifically intended to be read as open-ended terms of art.

## Claims

1. A method for activating software on an installation platform (140, 150), the method comprising:
receiving, with a first computing system (170), a software license key (160) and first identifying information;
storing the first identifying information in association with the software license key (160);
enrolling a user (100) by
receiving a first biometric sample with a second computing system (170, 200), and
storing the first biometric sample as a biometric template in association with the software license key (160); and
sending a first activation code from the first computing system (170) to the installation platform (140, 150) upon completion of the user enrollment.

2. The method of claim 1, wherein the software license key (160) is encrypted.

3. The method of claim 1, wherein the software license key (160) and the first identifying information are contained within an encrypted envelope.

4. The method of claim 1, 2 or 3, wherein receiving the software license key (160) comprises receiving a hash of the software license key.

5. The method according to any of the previous claims, wherein the first identifying information comprises a machine signature.

6. The method according to any of the previous claims, wherein the first identifying information comprises personal information.

7. The method according to any of the previous claims, wherein the first biometric sample comprises a voice sample and/or an image of the user.

8. The method according to any of the previous claims, further comprising after sending the first activation code
receiving, with the first computing system (170), the software license key (160) and second identifying information,
receiving a second biometric sample with the second computing system (170, 200),
matching the second biometric sample with the biometric template associated to the software license key (160), and
sending a second activation code.

9. A system for activating software on an installation platform (140, 150), the system comprising one or more servers (130, 170, 200) in communication with one another and forming a first and a second computing system (170, 200),
- the first computing system (170) including logic configured to
receive, over a network from the installation platform (140, 150), a software license key (160) and first identifying information; and
store the first identifying information in association with the software license key (160) in a computer-readable medium (110);
- the second computing system (170, 200) including logic configured to enroll a user (100) by
receiving a first biometric sample with the second computing system, and
storing the first biometric sample as a biometric template in association with the software license key (160); and
- the first computing system (170) including logic configured to
send a first activation code from the first computing system to the installation platform (140, 150) upon completion of the user enrollment.

10. The system of claim 9, wherein the software license key (160) is encrypted.

11. The system of claim 9, wherein the software license key (160) and the first identifying information are contained within an encrypted envelope and the logic is further configured to decrypt the envelope to determine the software license key and the first identifying information.

12. The system of claim 9, 10 or 11, wherein the logic of the first computing system (170) is further configured to, after sending the first activation code,
receive the software license key (160) and second identifying information, receive a second biometric sample,
match the second biometric sample with the biometric template associated to the software license key (160), and
send a second activation code.

13. A method for activating software comprising:
installing an instance of software on a platform (140, 150); and
activating the instance on the platform (140, 150) by
submitting a software license key (160) and a biometric sample, and
receiving, with the installation platform (140, 150), an activation code in response to submitting the biometric sample.

14. The method of claim 13, wherein the first identifying information comprises personal information.

15. The method of claim 13 or 14, wherein the first biometric sample comprises a voice sample and/or an image of a user (100).
